# EUROPÄISCHE PATENTSCHRIFT

(11) **EP 1 318 153 B1**
(45) Veröffentlichungstag und Bekanntmachung des Hinweises auf die Patenterteilung: **04.08.2004**
(21) Anmeldenummer: 02026787.8
(22) Anmeldetag: 02.12.2002
(51) Int. Cl.: C07F 7/18, C07F 7/08

(54) **Verfahren zur Herstellung von Styryl-funktionalisierten Silanen**
Process for the preparation of styrylsilanes
Procédé de préparation de styrylsilanes

(30) Priorität: 06.12.2001 DE 10159859
(43) Veröffentlichungstag der Anmeldung: 11.06.2003
(73) Patentinhaber: Fraunhofer-Gesellschaft zur Förderung der angewandten Forschung e.V., 80686 München (DE)
(72) Erfinder: Jacob, Stéphane, 97082 Würzburg (DE); Popall, Michael, 97072 Würzburg (DE); Fröhlich, Lothar, 97072 Würzburg (DE); Kahlenberg, Frank, 59929 Brilon (DE); Olma, Konrad, 97204 Höchberg (DE)

(56) Entgegenhaltungen:
- GB-A- 1 002 129
- US-A- 5 973 176
- PATENT ABSTRACTS OF JAPAN vol. 2002, no. 10, 10. Oktober 2002 (2002-10-10) & JP 2002 179687 A (DOW CORNING TORAY SILICONE CO LTD), 26. Juni 2002 (2002-06-26)

## Beschreibung

Die vorliegende Erfindung betrifft ein Verfahren zum Herstellen von styrylfunktionalisierten Silanen, insbesondere von Alkoxysilanen, das deutlich bessere Ausbeuten als die bisherigen Verfahren ermöglicht.

Styrylfunktionalisierte Alkoxylsilane sind von Interesse, da sie in einer Reihe von organisch polymerisierbaren Kieselsäurepolykondensaten eingesetzt werden können, die beispielsweise zu Farbpartikeln (JP-Patent 9328624), sauerstoffdurchlässigen Membranen (Y. Kawakami et al., Polymers with oligoorganosiloxane side chains as material for oxygen permeable membranes, Pol. J. 1985, 17, S 1159ff) oder zu elektrophotographischen Materialien (US-Patent 4,716,091) verarbeitet werden können.

Styrylfunktionalisierte Alkoxysilane sind jedoch nicht leicht herstellbar. Y. Kawakami, loc. cit., schlägt vor, eine Grignard-Verbindung aus Styrol herzustellen und diese mit Trichlormethylsilan umzusetzen. Dabei reagiert die Silan-Verbindung jeweils über die Chlorgruppe mit der Grignard-Verbindung. Allerdings enthält das Produkt noch weitere Chlorgruppen, die hochreaktiv sind und entweder zu Hydroxygruppen hydrolysiert werden oder anderweitig umgesetzt werden müssen. Derselbe Autor beschreibt in Polym. Comm 26, 133 (1985) auch die Herstellung von Trimethylstyrylsilan aus einer Grignard-Verbindung und Trimethylchlorsilan; in der Veröffentlichung Polym J. 17 (11), 1159-1172 (1985) wird die Ausbeute dieser Reaktion mit 36 % angegeben.

Auf der Basis von Grignard-Verbindungen hergestellt sind auch die fluorierten Styrylalkoxysilane, die in der DE 196 13 650 A1 beschrieben sind. Diese können entweder eine perfluorierte Styrylgruppe oder nur einen perfluorierten Phenylenring enthalten. Beispiel 1 dieser Druckschrift erläutert die Herstellung von p-Vinyltetrafluorophenyl-triethoxysilan im Detail: Eine Grignard-Verbindung wird aus perfluoriertem Bromstyrol und Magnesium in situ erzeugt und mit einem bereits im Reaktionsansatz vorhandenen Überschuß an Tetraethoxysilan umgesetzt. Die Reaktion wird bei Rückflußtemperatur von Diethylether durchgeführt. Nach Abtrennen der Magnesiumsalze und Entfernen des Lösungsmittels wird der Rückstand destilliert. Der in der DE 196 13 650 A1 vorgeschlagene Syntheseweg läßt sich allerdings nicht auf fluorfreie Styrylderivate übertragen. Aus nicht fluoriertem Bromstyrol bildet sich das entsprechende Grignard-Reagenz nämlich wesentlich schneller und stärker exotherm als aus dem fluorierten Derivat, so dass wegen der ebenfalls exotherm ablaufenden Umsetzung von Grignard-Verbindungen mit Alkoxysilanen ein explosionsartiger Verlauf der Reaktion zu erwarten ist. Außerdem beträgt die Ausbeute des styrylfunktionalisierten Alkoxysilans bei dieser Reaktion nur 35 %. Eine derartige Ausbeute ist unbefriedigend.

Aufgabe der vorliegenden Erfindung ist es, ein Verfahren zum Herstellen von styrylfunktionalisierten Silanen bereitzustellen, das einfach, aber gleichzeitig schonend ist und das zu wesentlich verbesserten Ausbeuten führt.

Überraschenderweise konnte festgestellt werden, dass diese Aufgabe gelöst wird, indem die styrylfunktionalisierten Silane wie bekannt über ein Grignard-Reagenz synthetisiert werden, wobei das Verfahren unter Verwendung von chlorfreien Alkoxysilanen als Silan-Ausgangskomponente abläuft und bestimmte Bedingungen eingehalten werden. Es hat sich nämlich herausgestellt, dass die hohe Reaktivität von Chlorsilanen die Selektivität der Substitutionsreaktion negativ beeinflusst, weshalb die im Stand der Technik beschriebenen Ausbeuten niedrig bleiben mussten. Außerdem ist entscheidend, dass die Herstellung der Grignard-Verbindung zum einen bei relativ milden Bedingungen vorgenommen wird und zum anderen im wesentlichen abgeschlossen sein sollte, bevor die Umsetzung mit dem Alkoxysilan erfolgt. Letztere sollte so kontrolliert werden, dass die Temperaturen nicht über etwa 20 °C, vorzugsweise nicht über etwa 15 °C steigen. Durch die geschickte Wahl nur eines Lösungsmittels für beide Verfahrensschritte kann dabei vorzugsweise gleichzeitig vermieden werden, das Grignard-Reagenz isolieren oder einen Lösungsmittelaustausch vorzunehmen zu müssen. Die Erfindung schlägt deshalb vor, das Grignard-Reagenz in Gegenwart eines Lösungsmittels, bestehend oder im wesentlichen bestehend aus Diethylether mit Tetrahydrofuran im Mischungsverhältnis von 30:70 bis 70:30, vorzugsweise von 50:50 bis 60:40, herzustellen. Die Umsetzung der Grignard-Verbindung mit dem als Edukt gewählten Silan sollte bei kontrollierten Temperaturen und erst erfolgen, wenn die Grignard-Reagenz-Bildung abgeschlossen ist, wobei dasselbe oder ein ähnliches Lösungsmittel verwendet werden kann.

Die Erfindung stellt daher ein Verfahren zum Herstellen von styrylgruppenhaltigen Silanen der allgemeinen Formel (I)

(St)_{b}SiR'ₐR_{4-a-b}

bereit, worin die Gruppen und Indices folgende Bedeutung haben:
St ist ein fakultativ mit einer über Kohlenstoff gebundenen Gruppe, beispielsweise Alkyl, Aryl, Alkylaryl oder Arylalkyl, substituierter Styrylrest,
R ist eine Gruppe, die über ein Kohlenstoffatom am Silicium gebunden ist, beispielsweise ggf. substituiertes Alkyl, Alkenyl, Alkinyl, Aryl, Alkylaryl oder Arylalkyl,
R' ist eine ggf. substituierte C₁-C₁₂-Alkoxygruppe, vorzugsweise Methoxy, Ethoxy, n-oder iso-Propoxy, n- oder iso- oder t-Butoxy,
a ist 0, 1, 2 oder 3 und
b ist 1, 2 oder 3,
das dadurch gekennzeichnet ist, dass eine Verbindung mit der Formel StX, worin X ein am Phenylring der Styrylgruppe gebundenes Halogen und vorzugsweise Brom oder Chlor ist, in einem Lösungsmittelgemisch, das aus Diethylether und Tetrahydrofuran im Verhältnis von 30:70 bis 70:30 (v/v) besteht oder diese Bestandteile im wesentlichen enthält, mit Magnesium umgesetzt wird, wobei die Reaktionstemperatur die Siedetemperatur der Mischung, die diese bei Raumdruck hat, nicht überschreiten sollte, und das entstandene Grignard-Reagenz anschließend bei einer Temperatur von höchstens 20 °C in einem Lösungsmittelgemisch, das im wesentlichen aus Diethylether und Tetrahydrofuran besteht, mit einem Silan der Formel (II)

SiR'ₐ₊₁R₃₋ₐ (II)

umgesetzt wird, worin die Gruppen und Indices die gleiche Bedeutung wie für Formel (I) angegeben haben.

Mit dem gewählten Lösungsmittelgemisch ist es einerseits möglich, bei Raumdruck eine Reaktionstemperatur von vorzugsweise zwischen etwa 40 °C und 55 °C bei der Herstellung des Grignard-Reagenz zu erreichen, die dessen Bildung in angemessener Zeit ermöglicht (falls nur reiner Diethylether (Siedepunkt: 34,6 °C) als Lösungsmittel verwendet wird, wird eine sehr niedrige Ausbeute erreicht). Andererseits bleibt die Reaktionstemperatur niedrig genug, um die Polymerisation der Vinyl-Gruppe zu vermeiden (falls nur reines Tetrahydrofuran (Siedepunkt: 65-67 °C) als Lösungsmittel verwendet wird, sinkt die Ausbeute erheblich). Die Reaktion ist exotherm; erst nachdem sie abgeklungen und die Lösung abgekühlt ist, wird erfindungsgemäß die Silankomponente zugesetzt, vorzugsweise gelöst in Diethylether oder einer Mischung aus Diethylether und Tetrahydrofuran. Letzteres erfolgt in vorteilhafter Weise bei niedrigen Temperaturen, ggf. unter Kühlen, im Bereich von 0 °C bis +10 °C, wobei die Temperatur höher liegen kann, aber nicht über 20 °C, stärker bevorzugt nicht über 15 °C steigen soll, um die Selektivität der Reaktion in Richtung der gewünschten Produkte zu erhöhen und um gefährliche Exothermie zu vermeiden. Sobald ein großer Teil der Substitutionsreaktion stattgefunden hat, sinkt die Temperatur wieder, und die Reaktion bricht ab. Die Reaktionsmischung kann daher anschließend einige Zeit, z.B. einige Stunden, erwärmt werden, z.B. bei etwa 45 °C, damit die Substitutionsreaktion vollständig abläuft. Da die Maximaltemperatur im zweiten Reaktionsschritt nicht mit dem Siedepunkt des Lösungsmittels korreliert, kommt es auf das Mengenverhältnis der eingesetzten Lösungsmittel nicht an, es wird in der Regel bei 30:70 bis 90:10 (v/v) Diethylether zu Tetrahydrofuran liegen.

Der Substitutionsgrad am Silan wird im wesentlichen durch das Verhältnis der eingesetzten Ausgangskomponenten bestimmt. Die Silankomponente wird dabei in geeigneter Weise im Überschuß, bezogen auf den gewünschten Substitutionsgrad, eingesetzt. So verwendet man vorzugsweise einen etwa 100%igen Überschuß an Silankomponente, wenn eine hohe Ausbeute an einfach styryl-substituiertem Silan erwünscht ist, und einen etwa 20%igen Überschuß an Silankomponente, wenn eine hohe Ausbeute an zweifach styryl-substituiertem Silan erhalten werden soll.

Das Verfahren ist besonders gut für die Herstellung von Silanen mit einer oder mehreren, vor allem ein oder zwei vorzugsweise unsubstituierten Styrylgruppen geeignet. Diese ist bzw. sind vorzugsweise über die p-Stellung an das Silan gebunden. Das erfindungsgemäß hergestellte Silan kann neben der Styrylgruppe weiterhin ein oder mehrere ggf. substituierte Alkyl-, ggf. substituierte Alkenyl-, ggf. substituierte Alkinyl- oder ggf. substituierte Arylgruppen enthalten. Außerdem oder statt dessen können Alkoxygruppen vorhanden sein, z.B. Methoxy- oder Ethoxygruppen. Letzteres ist in Hinblick auf die bereits einleitend erwähnte Einbaumöglichkeit von styrylfunktionalisierten Alkoxysilanen in organisch polymerisierbare Kieselsäure(hetero)kondensate bevorzugt.

Das Verfahren beginnt wie erwähnt mit der Herstellung des Grignard-Reagenz. Hierfür wird ein entsprechendes, an geeigneter Stelle halogeniertes, vorzugsweise bromiertes Styrol bzw. eine solche styrolhaltige Verbindung mit Magnesium umgesetzt. Wie üblich lassen sich hierfür Magnesiumspäne verwenden; außerdem wird der Lösung vorzugsweise etwas Jod zugesetzt. In vorteilhafter Weise werden die Magnesiumspäne im Lösungsmittel vorgelegt, und in Lösungsmittel gelöste Styrolverbindung wird zugetropft. Erhitzen unter Rückfluß unterstützt den schnellen Ablauf der Grignard-Reagenz-Bildung.

Die das Grignard-Reagenz enthaltende Lösung wird nach Beendigung der Reaktion bei möglichst geringen Temperaturen (z.B. 0-5 °C) mit einer Lösung der Silan-Ausgangsverbindung in einem geeigneten Lösungsmittel, vorzugsweise in Diethylether, versetzt, die in geeigneter Weise langsam zugetropft werden kann. Auf die Einhaltung der oben erwähnten Temperaturbereiche ist zu achten. Ether kann als Lösungsmittel für das Silan dienen, da die Temperaturen dieser Reaktionsstufe unter denen der Grignard-Reagenz-Herstellung liegen.

Nach Abschluß der Umsetzung werden die entstandenen anorganischen Salze vorzugsweise entfernt, beispielsweise durch Fällen mit sehr unpolarem Lösungsmittel und Filtration. Die Lösungsmittel werden ebenfalls entfernt, z.B. durch Abziehen im Rotationsverdampfer. Das Produkt wird bei Bedarf durch Destillation gereinigt.

Als Destillation eignet sich eine fraktionierte Destillation im Vakuum unter Zusatz eines an sich bekannten Polymerisationsinhibitors. Hierfür kommen vor allem 2,5-Di-tert.butylhydrochinon, 2,6-Di-tert.-butyl-p-Kresol oder p-Nitrosophenol in Frage, wobei p-Nitrosophenol bevorzugt ist. Dieser geht bei der Destillation nicht über, so dass Reinprodukte erhalten werden können.

Nachstehend soll die Erfindung anhand von Beispielen näher erläutert werden.

### Beispiel 1

### Synthese von p-Vinylphenylmethyldiethoxysilan

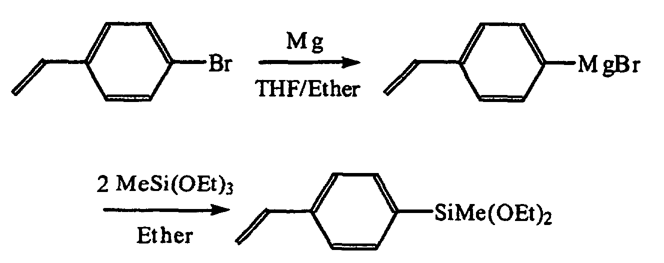

In einem Dreihalskolben unter Argon und mechanischer Rührung werden 11,7 g (480 mmol) Magnesiumspäne und einige Jodkristalle in 40 ml einer Lösung A (55 % Diethylether, 45 % Tetrahydrofuran) miteinander vermischt. Dann wird eine Lösung von 80,0 g (436 mmol) Bromstyrol, gelöst in 210 ml des Lösungsmittelgemisches A, langsam zugetropft, damit eine stetige exotherme Reaktion erreicht wird. Die Lösung wird bei Raumdruck unter Rückfluß gerührt. Nach Ablauf der exothermen Reaktion wird die Reaktionsmischung auf 2 °C gekühlt, und daraufhin werden 155,5 g (872 mmol) Methyltriethoxysilan in 160 ml trockenem Diethylether zugegeben; die Temperatur sollte 15 °C nicht wesentlich überschreiten. Nach Ablauf der Substitutionsreaktion wird noch beim Raumtemperatur über Nacht gerührt. Ungefähr 200 ml n-Heptan werden nun zugegeben, damit die Magnesiumsalze ausfallen. Diese werden abfiltriert, 5,4 g (0,44 mmol) 4-Nitrosophenol dem Filtrat zugegeben, das Lösungsmittel im Rotationsverdampfer abgezogen und der Rückstand unter Vakuum fraktioniert destilliert. 72,5 g (307 mmol) des Produkt wurden erhalten.
**Ausbeute: 70,3 %**
Siedepunkt: 65-66 °C (0,05 mbar)
IR (Film)
   3089 (w), 3065 (w), 3009 (w), 2973 (m), 2925 (w), 2880 (m), 1630 (w), 1599 (m), 1545 (w), 1500 (w), 1482 (w), 1442 (w), 1391 (m), 1294 (w), 1258 (m), 1207 (w), 1166 (m), 1121 (s), 1106 (s), 1079 (s), 1029 (w), 1018 (w), 990 (m), 955 (m), 910 (m), 823 (m), 808 (s), 782 (m), 762 (s), 740 (w), 678 (m), 601 (w)
¹H-NMR (400.1 MHz, CDCl₃)
   δ = 0.34 ppm (s, 3H, -Si-CH₃); 1.22 ppm (t, 6H, ³J = 6.3 Hz, -O-CH₂-CH₃); 3.80 ppm (d, 4H, ³J = 6.3 Hz, -O-CH₂-CH₃); 5.23 ppm (d, 1H, ³J(Z) = 10.5 Hz, CH₂=CH-); 5.76 ppm (d, 1H, ³J(E) = 17.1 Hz, CH₂=CH-); 6.68 ppm (dd, 1H, ³J = 17.1, 10.5 Hz, CH₂=CH-); 7,39 ppm (d, 2H, ³Jₒ = 6.5 Hz, H-2, H-5); 7,60 (d, 2H, ³Jₒ = 7.0 Hz, H-2, H-6).
¹³C-NMR (100.6 MHz, CDCl₃)
   δ = -4.1 ppm (1C, -Si-CH₃ ); 18.4 ppm (2C, -O-CH₂-CH₃); 58.5 ppm (2C, -O-CH₂-CH₃); 114.5 ppm (1C, CH₂=CH-); 125,7 ppm (2C, C-3, C-5); -); 134,3 ppm (2C, C-2, C-6); 134.5 ppm (1C, C-1); 136.9 ppm (1C, CH₂=CH-); 139,1 ppm (1C, C-4)
²⁹Si-NMR (79.5 MHz, CDCl₃)
   δ = -17.9 ppm

### Beispiel 2

### Synthese von p-Vinylphenyltrimethoxysilan, Bis-(p-vinylphenyl)-dimethoxysilan und Tris-(p-vinylphenyl)-methoxysilan

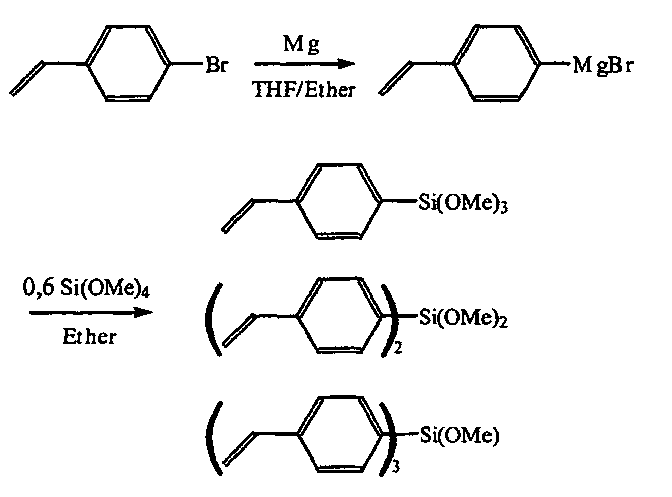

Styrylmagnesiumbromid wird wie in Beispiel 1 hergestellt. Dann werden 39,9 g (262 mmol) Tetramethoxysilan in 80 ml getrocknetem Diethylether zu der auf 2 °C gekühlten Lösung des Grignard-Reagenz gegeben. Die Temperatur sollte wiederum 15 °C nicht wesentlich überschreiten. Wenn die Zugabe abgeschlossen ist und die Temperatur wieder auf ungefähr 5 °C gesunken ist, wird der Ansatz eineinhalb Stunden auf 45 °C erhitzt, damit die Substitution vollständig abläuft, und anschließend bei Raumtemperatur über Nacht gerührt. Der Ansatz wird so wie im Beispiel 1 aufgearbeitet. Nach Entzug des Lösungsmittels erhält man 105,3 g einer hellgelben Mischung. Die ²⁹Si-NMR-Spektroskopie zeigt, daß das Rohprodukt p-Vinylphenyltrimethoxysilan, Bis-(p-vinylphenyl)-dimethoxysilan und Tris-(pvinylphenyl)-methoxysilan enthält.

Die mono- und disubstituierten Alkoxysilane werden destillativ von dem Rohprodukt abgetrennt und gereinigt:
p-Vinylphenyltrimethoxysilan (monosubstituiertes Alkoxysilan) 15,8 g (70,5 mmol)
   **Ausbeute 34,9 %**
   Siedepunkt: 59-60 °C (0,03 mbar)
   IR (Film)
      3067 (w), 2943 (m), 2841 (m), 1629 (w), 1600 (w), 1545 (w), 1463 (w), 1392 (w), 1192 (m), 1128 (s), 1089 (s), 991 (w), 914 (w), 808 (s), 714 (m), 606 (w)
   ¹H-NMR (400.1 MHz, CDCl₃)
      δ = 3.62 ppm (s, 9H, -O-CH₃); 5.29 ppm (d, 1H, ³J(Z)= 10.0 Hz, CH₂=CH-); 5.81 ppm (d, 1H, ³J(E) = 17.6 Hz, CH₂=CH-); 6.72 ppm (dd, 1H, ³J = 17.6, 10.0 Hz, CH₂=CH-); 7,43 ppm (d, 2H, ³Jₒ = 6.5 Hz, H-2, H-5); 7,61 (d, 2H, ³Jₒ = 7.0 Hz, H-2, H-6)
   ¹³C-NMR (100.6 MHz, CDCl₃)
      δ = 50.8 ppm (3C, -O-CH₃); 115.0 ppm (1C, CH₂=CH-); 125,8 ppm (2C, C-3, C-5); -); 128.8 ppm (1C, C-1); 135,1 ppm (2C, C-2, C-6); 136.7 ppm (1C, CH₂=CH-); 139,7 ppm (1C, C-4)
   ²⁹Si-NMR (79.5 MHz, CDCl₃)
      δ = -54.4 ppm
Bis-(p-vinylphenyl)-dimethoxysilan (disubstituiertes Alkoxysilan) 24,5 g (82,8 mmol)
   **Ausbeute: 41,0 %**
   **Gesamtausbeute: 75,9 %**
   IR (Film)
      3087 (w), 3065 (w), 3009 (m), 2965 (m), 2940 (m), 2838 (m), 1629 (w), 1599 (m), 1545 (w), 1500 (w), 1463 (w), 1420 (w), 1392 (m), 1295 (w), 1263 (w), 1191 (s), 1126 (s), 1083 (s), 1029 (w), 1018 (w), 990 (m), 913 (m), 834 (s), 807 (s), 754 (w), 733 (m), 715 (w), 652 (m), 634 (w), 598 (w)
   ¹H-NMR (400.1 MHz, CDCl₃)
      δ = 3.61 ppm (s, 6H, -O-CH₃); 5.26 ppm (d, 2H, ³J(Z)= 10.0Hz, CH₂=CH-); 5.79 ppm (d, 2H, ³J(E) = 17.1 Hz, CH₂=CH-); 6.70 ppm (dd, 2H, ³J = 17.1, 10.0 Hz, CH₂=CH-); 7,41 ppm (d, 4H, ³Jₒ = 5.0 Hz, Hₘₑₜₐ); 7,62 ppm (d, 4H, ³Jₒ = 6.0 Hz, Hₒᵣₜₕₒ)
   ¹³C-NMR (100.6 MHz, CDCl₃)
      δ = 50.9 ppm (2C, -O-CH₃); 114.8 ppm (2C, CH₂=CH-); 125,7 ppm (4C, Cₘₑₜₐ); 131.8 ppm (2C, C-Si); 135,1 ppm (4C, Cₚₐᵣₐ); 136.8 ppm (2C, CH₂=CH-); 139,4 ppm (2C, Cₚₐᵣₐ)
   ²⁹Si-NMR (79,5 MHz, CDCl₃)
      δ = -29,0 ppm
Tris-(p-vinylphenyl)-methoxysilan (Rohprodukt des trisubstituierten Alkoxysilans)
   ²⁹Si-NMR (79,5 MHz, CDCl₃)
      δ = -11,5 ppm

### Vergleichsbeispiel 1

### Synthese von p-Vinylphenyltrimethoxysilan mit Diethylether als Lösungsmittel

Styrylmagnesiumbromid wird so wie in Beispiel 1 hergestellt, aber mit reinem Diethylether als Lösungsmittel. Die Substitutionsreaktion wird so wie im Beispiel 2, aber mit 132,7 g (872 mmol) Tetramethoxysilan durchgeführt. Nach der Destillation erhält man 30,9 g (168,6 mmol) unreagierte Bromstyrol und 8,9 g (39,6 mmol) p-Vinylphenyltrimethoxysilan **(Ausbeute: 9,1** %).

### Vergleichsbeispiel 2

### Synthese von p-Vinylphenyltrimethoxysilan, mit reinem Tetrahydrofuran als Lösungsmittel für die Herstellung des Grignardreagenz

Styrylmagnesiumbromid wird so wie im Beispiel 1 hergestellt, aber mit reinem Tetrahydrofuran als Lösungsmittel. Die Substitutionsreaktion wird so wie im Vergleichsbeispiel 1 durchgeführt. Nach Destillation werden 38,2 g (170,5 mmol) p-Vinylphenyltrimethoxysilan erhalten **(Ausbeute: 39,1 %**).

### Vergleichsbeispiel 3

### Synthese von p-Vinyltetrafluorphenyltrimethoxysilan

Das Verfahren des Beispiels 1 wurde wiederholt, wobei jedoch das Bromstyrol durch Bromtetrafluorstyrol ersetzt wurde.
Anstelle von Methyltriethoxysilan wurde Tetramethoxysilan verwendet. **(Ausbeute: 17 %).**

## Patentansprüche

1. Verfahren zum Herstellen von styrylgruppenhaltigen Silanen der allgemeinen Formel (I)
(St)_{b}SiR'ₐR_{4-a-b}
worin die Gruppen und Indices folgende Bedeutung haben:
St ist eine fakultativ mit einer über Kohlenstoff gebundenen Gruppe substituierte Styrylgruppe,
R ist eine Gruppe, die über ein Kohlenstoffatom am Silicium gebunden ist,
R' ist eine ggf. substituierte C₁-C₁₂-Alkoxygruppe,
a ist 0, 1, 2 oder 3 und
b ist 1, 2 oder 3,
**dadurch gekennzeichnet, dass** eine Verbindung mit der Formel StX, worin X ein am Phenylring der Styrylgruppe gebundenes Halogen ist, in einem Lösungsmittelgemisch, das aus Diethylether und Tetrahydrofuran im Verhältnis von 30:70 bis 70:30 (v/v) besteht oder diese Bestandteile im wesentlichen enthält, mit Magnesium umgesetzt wird, wobei die Reaktionstemperatur die Siedetemperatur der Mischung, die diese bei Raumdruck hat, nicht überschreitet, und
das entstandene Grignard-Reagenz anschließend bei einer Temperatur von höchstens 20 °C in einem Lösungsmittelgemisch, das im wesentlichen aus Diethylether und Tetrahydrofuran besteht, mit einem Silan der Formel (II)
SiR'ₐ₊₁R₃₋ₐ (II)
umgesetzt wird, worin die Gruppen und Indices die gleiche Bedeutung wie für Formel (I) angegeben haben.

2. Verfahren nach Anspruch 1, **dadurch gekennzeichnet, daß** das Lösungsmittel im wesentlichen aus Diethylether und Tetrahydrofuran im Verhältnis von 50:50 bis 60:40 besteht.

3. Verfahren nach Anspruch 1 oder 2, **dadurch gekennzeichnet, dass** die Temperatur, bei der das entstandene Grignard-Reagenz mit dem Silan der Formel (II) umgesetzt wird, 15 °C nicht übersteigt.

4. Verfahren nach einem der voranstehenden Ansprüche, **dadurch gekennzeichnet**, das nach Beendigung der Reaktion die entstandenen Salze zumindest teilweise abgetrennt und das Lösungsmittel entfernt werden, worauf das Produkt einer fraktionierten Destillation unterworfen wird.

5. Verfahren nach Anspruch 4, **dadurch gekennzeichnet, dass** die fraktionierte Destillation in Gegenwart eines Polymerisationsinhibitors erfolgt.

6. Verfahren nach Anspruch 5, **dadurch gekennzeichnet, dass** als Polymerisationsinhibitor 2,5-Di-tert.-butylhydrochinon oder 2,6-Di-tert.-butyl-p-Kresol oder vorzugsweise p-Nitrosophenol eingesetzt wird.

7. Verfahren nach einem der voranstehenden Ansprüche, **dadurch gekennzeichnet, dass** die Gruppe (St) eine vorzugsweise unsubstituierte Styrylgruppe ist, die in p-Stellung an das Silan gebunden ist und/oder dass b 1 oder 2 bedeutet.

8. Verfahren nach einem der voranstehenden Ansprüche, **dadurch gekennzeichnet, dass** R in Formel (I) ggf. substituiertes C₁-C₁₂-Alkyl, ggf. substituiertes C₃-C₂₀-Alkenyl oder -Alkinyl oder ggf. substituiertes C₅-C₂₀-Aryl bedeutet und R' in Formel (1) C₁-C₄-Alkoxy, insbesondere Methoxy oder Ethoxy bedeutet.

9. Verfahren nach Anspruch 8, **dadurch gekennzeichnet, dass** R in Formel (I) ein ggf. verzweigtes oder cyclisches C₁-C₈-Alkyl, insbesondere Methyl oder Ethyl, bedeutet.

## Claims

1. Method for preparing silanes containing styryl groups, of the general formula (I)
(St)_{b}SiR'ₐR_{4-a-b}
in which the groups and indices have the following meaning:
St is a styryl group which is optionally substituted by a group bonded via carbon,
R is a group which is bonded to the silicon via a carbon atom,
R' is a possibly substituted C₁-C₁₂ alkoxy group,
a is 0, 1, 2 or 3 and
b is 1, 2 or 3,
**characterised in that**
a compound having the formula StX, in which X is a halogen bonded to the phenyl ring of the styryl group, is reacted with magnesium in a solvent mixture, which comprises diethyl ether and tetrahydrofuran in a ratio of 30:70 to 70:30 (v/v) or substantially contains these constituents, the reaction temperature not exceeding the boiling temperature of the mixture at ambient pressure, and the Grignard reagent produced is then reacted at a temperature of at the most 20°C in a solvent, which substantially comprises diethyl ether and tetrahydrofuran, with a silane of formula (II)
SiR'ₐ₊₁R₃₋ₐ (II)
in which the groups and indices have the same meaning as quoted for formula (I).

2. Method according to claim 1, **characterised in that** the solvent substantially comprises diethyl ether and tetrahydrofuran in a ratio of 50:50 to 60:40.

3. Method according to claim 1 or 2, **characterised in that** the temperature at which the produced Grignard reagent is reacted with the silane of formula (II) does not exceed 15°C.

4. Method according to one of the preceding claims, **characterised in that**, after the reaction has terminated, the salts produced are at least partially separated and the solvent is removed, whereupon the product is subjected to a fractional distillation.

5. Method according to claim 4, **characterised in that** the fractional distillation takes place in the presence of a polymerisation inhibitor.

6. Method according to claim 5, **characterised in that** 2,5-di-tert-butylhydroquinone, or 2,6-di-tert-butyl-p-cresol or preferably p-nitrosophenol is used as the polymerisation inhibitor.

7. Method according to one of the preceding claims, **characterised in that** the group (St) is a preferably unsubstituted styryl group which is bonded in the p-position to the silane and/or **in that** b means 1 or 2.

8. Method according to one of the preceding claims,
**characterised in that** R in formula (I) means possibly substituted C₁-C₁₂ alkyl, possibly substituted C₃-C₂₀ alkenyl or alkinyl or possibly substituted C₅-C₂₀ aryl and R' in formula (I) means C₁-C₄ alkoxy, especially methoxy or ethoxy.

9. Method according to claim 8, **characterised in that** R in formula (I) means a possibly branched or cyclic C₁-C₈ alkyl, especially methyl or ethyl.

## Revendications

1. Procédé de fabrication de silanes contenant des groupes styryle répondant à la formule générale (I)
(St)_{b}SiR'ₐR_{4-a-b}
dans laquelle les groupes et les indices ont la signification suivante :
St représente un groupe styryle facultativement substitué par un groupe lié par l'intermédiaire de carbone,
R représente un groupe qui est lié au silicium par l'intermédiaire d'un atome de carbone,
R' représente un groupe alcoxy en C₁ à C₁₂ éventuellement substitué,
a est égal à 0, 1, 2 ou 3 et
b est égal à 1, 2 ou 3,
**caractérisé en ce que**
l'on met en réaction avec du magnésium un composé de formule StX, dans laquelle X représente un atome d'halogène lié au cycle phényle du groupe styryle dans un mélange de solvants constitué d'éther diéthylique et de tétrahydrofurane dans le rapport de 30:70 à 70:30 (v/v) ou contenant essentiellement ces constituants, la température de réaction ne devant pas dépasser la température d'ébullition du mélange que celui-ci a à la pression ambiante,
et le réactif de Grignard formé étant ensuite mis en réaction à une température de 20° C au maximum dans un mélange de solvants constitué essentiellement d'éther diéthylique et de tétrahydrofurane, avec un silane répondant à la formule (II)
SiR'ₐ₊₁R₃₋ₐ (II)
dans laquelle les groupes et indices ont la même signification que ceux indiqués pour la formule (I).

2. Procédé selon la revendication 1,
**caractérisé en ce que**
le solvant est essentiellement constitué d'éther diéthylique et de tétrahydrofurane dans un rapport de 50:50 à 60:40.

3. Procédé selon la revendication 1 ou 2,
**caractérisé en ce que**
la température à laquelle le réactif de Grignard formé est mis en réaction avec le silane de formule (II), ne dépasse pas 15°C.

4. Procédé selon l'une quelconque des revendications précédentes,
**caractérisé en ce que**
à l'issue de la réaction, on sépare, au moins en partie les sels formés et on élimine le solvant, à la suite de quoi le produit est soumis à une distillation fractionnée.

5. Procédé selon la revendication 4,
**caractérisé en ce que**
la distillation fractionnée est réalisée en présence d'un inhibiteur de polymérisation.

6. Procédé selon la revendication 5,
**caractérisé en ce que**
comme inhibiteur de polymérisation, on utilise de la 2,5-di-tert-butylhydroquinone ou du 2,6-di-tert-butyl-p-crésol ou de préférence du p-nitrosophénol.

7. Procédé selon l'une quelconque des revendications précédentes,
**caractérisé en ce que**
le groupe (St) est un groupe styryle de préférence non substitué qui est lié au silane sur la position p, et/ou b est égal à 1 ou 2.

8. Procédé selon l'une quelconque des revendications précédentes,
**caractérisé en ce que**
R dans la formule (I) représente un groupe alkyle en C₁ à C₁₂ éventuellement substitué, un groupe alcényle ou alcynyle en C₃ à C₂₀ le cas échéant substitué ou un groupe aryle en C₅ à C₂₀ le cas échéant substitué et R' dans la formule (I) un groupe alcoxy en C₁ à C₄, en particulier un groupe méthoxy ou éthoxy.

9. Procédé selon la revendication 8,
**caractérisé en ce que**
R, dans la formule (I) représente un groupe alkyle en C₁ à C₈ éventuellement ramifié ou cyclique, en particulier un groupe méthyle ou éthyle.
